# EUROPÄISCHE PATENTSCHRIFT

(11) **EP 1 579 754 B1**
(45) Veröffentlichungstag und Bekanntmachung des Hinweises auf die Patenterteilung: **01.09.2010**
(21) Anmeldenummer: 05006075.5
(22) Anmeldetag: 19.03.2005
(51) Int. Cl.: A01C 19/04, A01C 7/10

(54) **Verteilmaschine zum Ausbringen von Verteilgütern**
Distributor for flowable material
Distributeur de produits coulants

(30) Priorität: 23.03.2004 DE 102004014063
(43) Veröffentlichungstag der Anmeldung: 28.09.2005
(73) Patentinhaber: Rabe Agri GmbH, 49152 Bad Essen (DE)
(72) Erfinder: Heitmeyer, Kilian, 49152 Bad Essen (DE); Gehrke, Rudolf, 49152 Bad Essen (DE)
(74) Vertreter: Tappe, Hartmut

(56) Entgegenhaltungen:
- EP-A- 1 163 831
- US-A- 5 924 371
- US-A- 6 145 455
- US-A1- 2003 110 999

## Beschreibung

Die Erfindung betrifft eine Verteilmaschine zum Ausbringen eines Verteilgutes wie Saatgut, Dünger oder dergleichen auf eine land- oder forstwirtschaftlich genutzte Ackerfläche , die an einem oder auf einem Schlepper bzw. Trägerfahrzeug oder einer schlepperbetriebenen Bodenbearbeitungsmaschine installierbar ist und zum Verteilen des vorzugsweise körnigen Verteilgutes auf die Ackerfläche dient , wobei die Verteilmaschine einen Vorratsbehälter für das Verteilgut und aus ihrer Arbeitsstellung aushebbare Streuer für das Verteilgut, insbesondere Säschare oder Düngerstreuer, sowie eine von einem regelbaren, vorzugsweise elektrischen Antrieb angetriebene Dosiereinrichtung für die dosierte pneumatische Förderung des Verteilgutes aus dem Vorratsbehälter über eine Zuleitung zu den zugehörigen Streuern umfaßt und wobei die Geschwindigkeit und/oder der zurückgelegte Weg der Streuer von einem Meßfühler sensorisch gemessen und die so gewonnenen Meßsignale zur Steuerung des Antriebes für die Dosiereinrichtung in der Weise verwendet werden, dass eine gleichförmige Verteilung des Verteilgutes auf der gesamten Ackerfläche gewährleistet ist.

Eine solche Verteilmaschine ist aus der europäischen Patentschrift EP 0 650 660 B1 im wesentlichen bekannt. Sie soll sicherstellen, dass die spezifischen Austragsmengen des Verteilgutes unabhängig von Störgrößen aus der Bewegung der Verteilmaschine, der Ackerfläche usw. stets selbsttätig eingehalten werden. Des weiteren soll die Steuerung der Verteilmaschine sicherstellen, dass zum Säbeginn, durch die langen Förderwege, kein verspäteter Säbeginn erfolgt. Am Saatende verhindert die Steuerung auf der Verteilfläche eine Saatanhäufung. Das Zu- und Abschalten der Dosierung erfolgt bei dieser Ausführung durch eine Schaltvorrichtung, die im Arbeitsbereich des Betreibers vorgesehen ist. Eine automatische Schaltfolge ist bei dieser Art Steuerung nicht vorgesehen.

Eine weitere Steuerung für eine Verteilmaschine ist in US 5,924,371 A beschrieben. Die offenbarte Steuerung ist für ein Einzelkom-Sägerät dargestellt, wobei sowohl das Einzelkom-Sägerät als auch die Steuerung in mehrere Sektionen aufgeteilt ist. Die gewünschten Daten für die Aussaatmengen der Säeinheiten können über einen Monitor in der Steuerung hinterlegt werden. Im Automatikbetrieb unterstützen DGPS-Signale die Steuerung. Mittels eines Sensors am Rad des Einzelkorn-Sägerätes erkennt die Steuerung, ob sich die Verteilmaschine in der unteren Position oder in der angehobenen Position befindet. Im angehobenen Zustand bringt das Einzelkorn-Sägerät kein Verteilgut aus.

Der Erfindung liegt die Aufgabe zugrunde, eine Verteilmaschine der eingangs näher bezeichneten Art so auszubilden, dass die Dosierung der Verteilmaschine vor dem Aufsetzen der Verteiler auf den Boden automatisch eingeschaltet wird, so dass das Verteilgut am Beginn der zu behandelnden Fläche den Boden erreicht und dass bei in Fahrtrichtung hintereinander angeordneten Verteilern das Verteilgut aus den nachfolgenden Verteilern erst beim Erreichen des Säbeginns der vorderen Verteiler abgelegt wird. Der Säbeginn der vorderen und hinteren Verteiler erfolgt durch das verzögerte Einsetzen der hinteren Verteiler auf nahezu einer Linie quer zur Arbeitsrichtung. Am Säende erfolgt die Schaltung in umgekehrter Reihenfolge, so dass die Dosierung der vorderen Verteiler zuerst abgeschaltet wird.

Erfindungsgemäß wird die Aufgabe nach den Merkmalen des Anspruchs 1 gelöst, wobei in den weiteren Patentansprüchen in vorteilhafter Weise ergänzende Lösungen gezeigt werden.

Die erfindungsgemäße Verteilmaschine weist mindestens einen Verteilgutbehälter auf. Daran angeordnet ist mindestens eine Dosiervorrichtung, die vorzugsweise elektronisch gesteuert wird. Das dosierte Verteilgut wird über Leitungen zu den einzelnen Verteilern gefördert. Die Verteiler können je nach Verteilerbauart das Verteilgut sowohl in den Boden ablegen als auch auf dem Boden ablegen. Als Antrieb für diese Art Dosierung mit elektronischer Steuerung zur Verteilung von Streugut dient vorzugsweise ein Elektromotor. Das Zu- und Abschalten der Dosierung bei einem Flüssigkeitsverteiler erfolgt vorzugsweise durch ein oder mehrere Elektromagnetventile.

Der zurückgelegte Weg und die Fahrgeschwindigkeit der Verteilmaschine werden von einem Meßfühler ermittelt, vorzugsweise von einem Radarsensor. Es ist auch möglich, die Arbeitsstrecke der Verteilmaschine über eine mechanische Abtasteinrichtung, wie einem Spornrad, zu ermitteln.

Das Ein- und Ausschalten der Dosierungssteuerung erfolgt von mindestens einem Sensor, der erkennt, ob sich die Verteilmaschine von der Nichtarbeitsstellung in Arbeitsstellung bewegt oder umgekehrt. Die Steuerung ermittelt nach dem Aktivieren durch den Sensor für die Arbeitsstellung die Förderzeit für das Verteilgut und die zurückzulegende Arbeitsstrecke bis zum Erreichen des Verteilgutes an der Ablagestelle.

Bei in Fahrtrichtung hintereinander versetzt angeordneten Verteilern werden zuerst die vorderen Verteiler mit Verteilgut beschickt. Die nachfolgenden Verteiler verteilen das Verteilgut erst nach der Totstrecke zwischen den vorderen und den nachfolgenden Verteilern, so dass die Verteilung des Verteilgutes auf der zu behandelnden Fläche auf nahezu einer Linie quer zur Verteilmaschine beginnt. Es ist auch möglich, einzelne Dosiervorrichtungen beim Behandeln von Keilflächen oder beim Behandeln von Flächen, die in der Breite kleiner sind als die Arbeitsbreite der Verteilmaschine, abzuschalten oder verzögert einzuschalten. Verläßt die Verteilmaschine die Arbeitsstellung, so wird zunächst die Dosiervorrichtung für die vorderen Verteiler abgeschaltet und dann die nachfolgende Dosierung, so dass die Verteilung der einzelnen Verteiler am Feldende in etwa auf einer Linie quer zur Arbeitsrichtung der Verteilmaschine endet. Diese Steuerungsart ermöglicht es, mit einer Verteilmaschine, die eine große Arbeitsbreite aufweist oder mit einer Verteilmaschine, die unterschiedliche Verteilgüter ausbringen kann, eine gleichmäßige Verteilung auf der zu behandelnden Fläche zu erreichen. Die unbehandelten Flächen - sogenannte Saatfenster - und Doppelbehandlungen werden auf der Verteilfläche vermeiden, besonders am Vorgewende.

Damit der Verteilbeginn und das Verteilende am Vorgewende immer im gleichen Abstand zum Vorgewenderand erfolgt, ist es möglich, die Steuerung durch Satellitenfunk -GPS- zu unterstützen. Die Verteilmaschine kann dann am Vorgewende automatisch in Arbeitsstellung gebracht werden, sowie am gegenüberliegenden Vorgewende in die Nichtarbeitsstellung.

Weitere Einzelheiten der Erfindung sind den Zeichnungen und Bespielbeschreibungen zu entnehmen. Hierzu zeigen die nachfolgenden Zeichnungen:

**Fig. 1** eine erfindungsgemäße Verteilmaschine in Arbeitsstellung und in der Seitenansicht

**Fig. 2** eine Verteilmaschine in der Nichtarbeitsstellung und in der Seitenansicht

**Fig. 3** ein Trägerfahrzeug mit einer Verteilmaschine in der Seitenansicht

**Fig. 4** einen Fahrwerkrahmen mit Sensorenanordnung in Arbeitsstellung und in der Seitenansicht

**Fig. 5** einen Fahrwerkrahmen mit Sensorenanordnung in Nichtarbeitsstellung und in der Seitenansicht

**Fig. 6** eine Verteilmaschine mit Drehwinkelsensor am Fahrwerkrahmen in der Seitenansicht

**Fig. 7** eine Verteilmaschine mit in Arbeitsrichtung versetzt angeordneten Verteilern in der Draufsicht

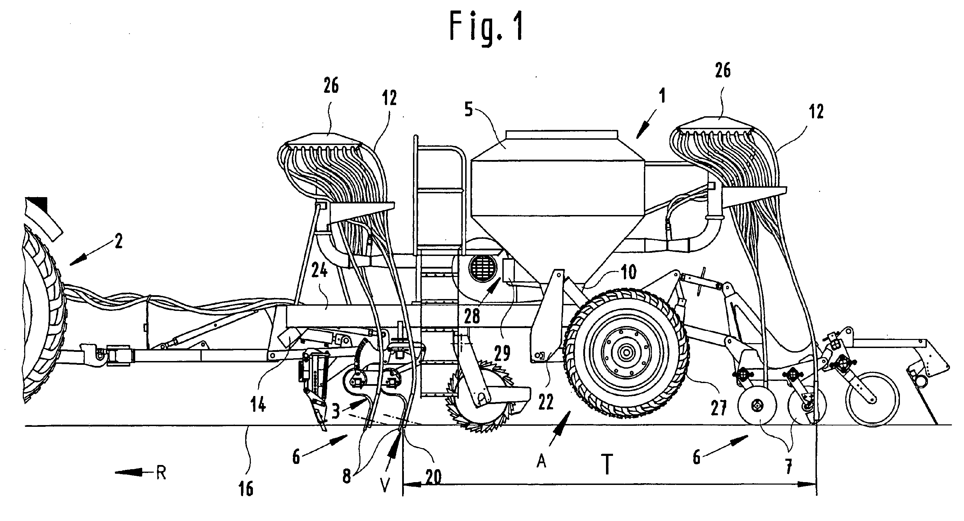

**Fig. 1** zeigt eine erfindungsgemäße Verteilmaschine **1** hinter einem Schlepper **2.** Die vorderen Verteiler **6** sind als Düngerverteiler **8** und als Bodenbearbeitungsgerät **3** ausgebildet. Sie sind unter dem Rahmen **24** angeordnet. Auf dem Rahmen **24** weist die Verteilmaschine **1** einen doppelten Verteilgutbehälter **5** mit zwei Dosiervorrichtungen **10** auf, wobei nur ein Verteilgutbehälter **5** und eine Dosiervorrichtung **10** sichtbar sind. Vor den Verteilgutbehältern **5** ist ein Verteilerkopf **26** für die Düngerverteiler **8** angeordnet. Das Verteilgut gelangt über die Zuleitungen **12** zu den Düngerverteilern **8.** Hinter dem Verteilgutbehälter **5** ist der Verteilerkopf **26** für die hinteren Verteiler **6** angeordnet, die als Säschare **7** ausgebildet sind. Am hinteren Ende des Rahmens **24** weist die Verteilmaschine **1** einen Fahrwerkrahmen **22** mit Rädern **27** auf. Während der Arbeit nehmen die Räder **27** die Position Arbeitsstellung **A** ein, dabei berühren sie vorzugsweise nicht die Bodenoberfläche **16.** Hinter den Rädern **27** arbeiten die Säschare **7.**

Die Arbeitsgeschwindigkeit und der zurückgelegte Weg der Verteilmaschine **1** werden mit dem Meßfühler **14** ermittelt, wobei der Meßfühler **14** der dargestellten Verteilmaschine **1** vorzugsweise als Radarsensor ausgebildet ist. Die Meßsignale vom Meßfühler **14** werden vom Rechner **29** der Steuerung **28** verarbeitet, so dass die Verteilung der Verteilgüter am Verteilbeginn **V** beginnt und die Verteilung an den Säscharen **7** erst beim Erreichen des Verteilbeginns **V** beginnt. Auf der Totstrecke **T** wird dabei bis zum Verteilbeginn **V** von den Säscharen **7** kein Verteilgut abgelegt. Zum Verteilende wird jedoch von den Säscharen **7** bis zur Verteilgrenzlinie **20** Verteilgut ausgebracht.

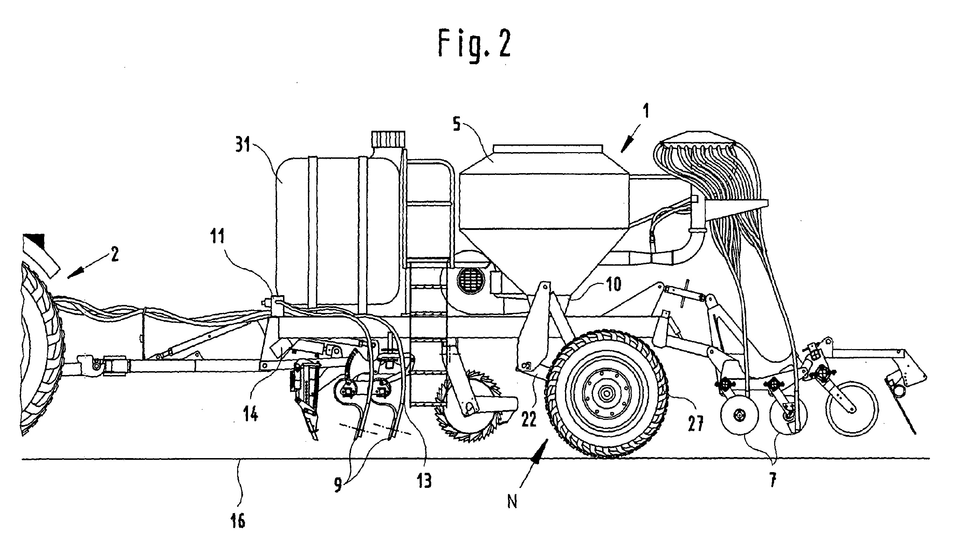

Eine Verteilmaschine **1** in Nichtarbeitsstellung **N** mit einem Flüssigkeitsbehälter **31** und einem Verteilgutbehälter **5** wird in **Fig. 2** dargestellt. Die Verteilmaschine **1** stützt sich dabei auf den Rädern **27** und dem Schlepper **2** ab. Die Dosiervorrichtung **10** für das Verteilgut zu den Säscharen **7** ist abgeschaltet, sowie der Flüssigkeitszufluß von der Dosiervorrichtung **11** zu den Zuleitungen **13** der Flüssigkeitsverteiler **9.** Es besteht auch die Möglichkeit, die Flüssigkeitsverteiler **9** an einen nicht dargestellten Querbalken anzuordnen, so dass die Verteilflüssigkeit in der Arbeitsstellung **A** auf der Bodenoberläche **16** verteilt wird.

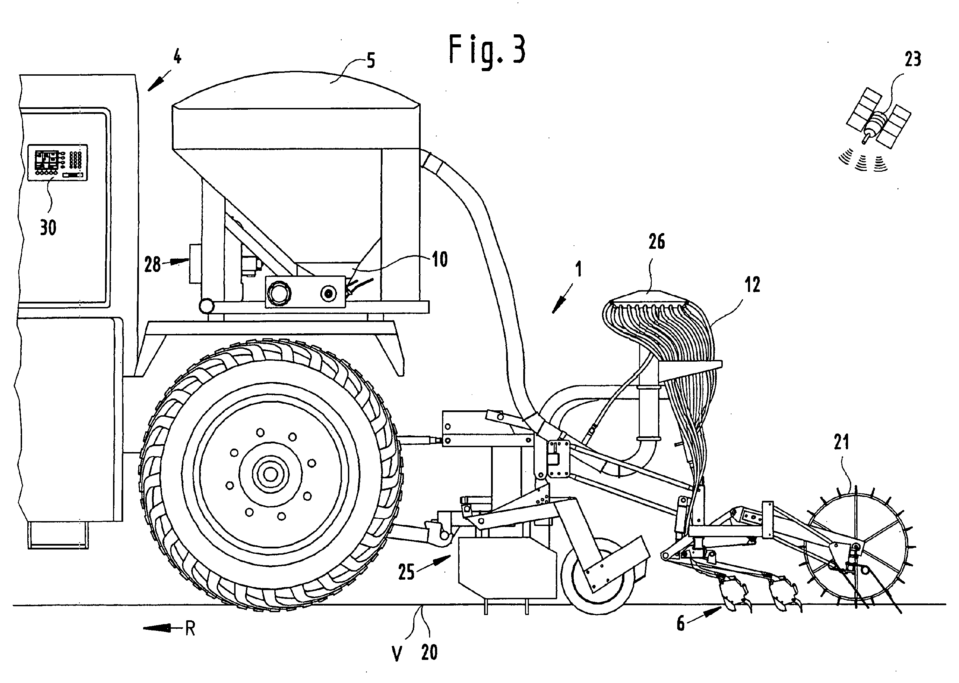

Eine weitere Ausführung einer Verteilmaschine **1** zeigt **Fig. 3**. Der Verteilgutbehälter **5** ist auf einem Trägerfahrzeug **4** angeordnet. Die Steuerung **28** und das Anzeigedisplay **30** für die Steuerung **28** befinden sich ebenfalls auf dem Trägerfahrzeug **4.** Die zurückgelegte Wegstrecke und die Fahrgeschwindigkeit werden vom Meßrad **21** zur Steuerung **28** übermittelt. Zur Ermittlung des Verteilbeginns **V** und des Verteilendes an der Verteilgrenzlinie **20** am Vorgewende wird ein Satellit **23** angepeilt. Die Saatverteiler **6** und das Meßrad **21** arbeiten bei der dargestellten Anordnung vorzugsweise hinter dem Bodenbearbeitungsgerät **25.**

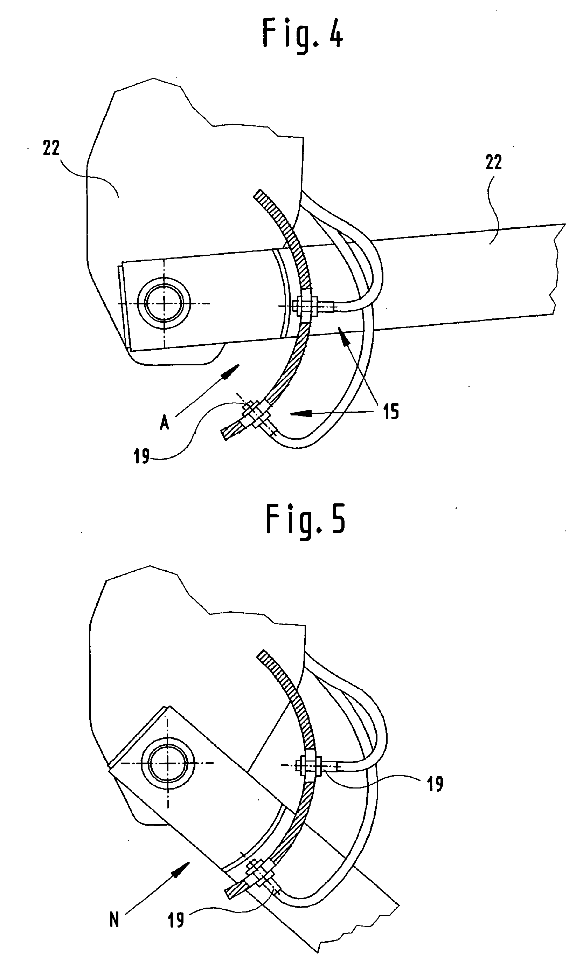

Zum Ermitteln der Position Arbeitsstellung **A** der Verteilmaschine **1** sind am Fahrwerkrahmen **22** zwei Sensoren **15** verstellbar angeordnet. Durch die Anordnung der Sensoren **15,** die als Näherungsschalter **19** ausgebildet sind, erkennt der Rechner **29,** ob sich die Verteilmaschine **1** in Arbeitsstellung **A** befindet, wie **Fig. 4** zeigt, oder in Nichtarbeitsstellung **N** befindet, wie in **Fig. 5** dargestellt.

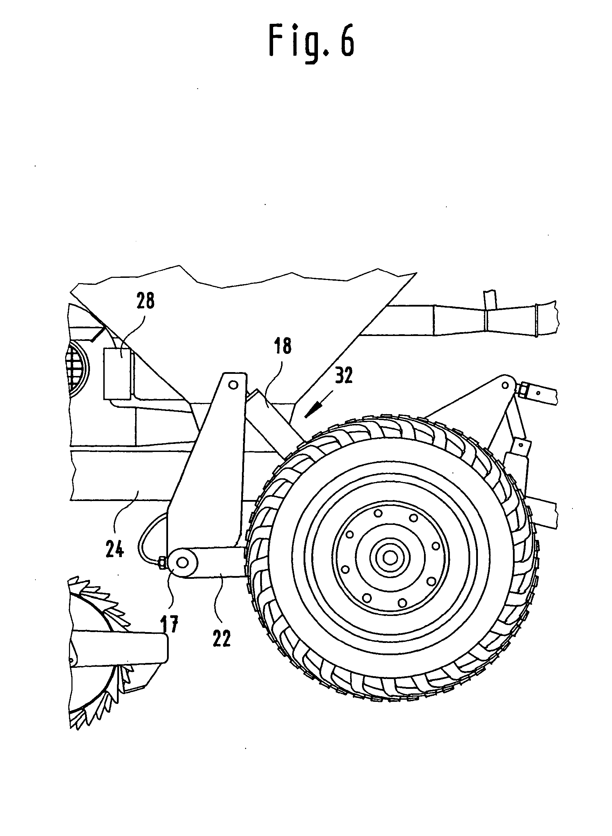

Es ist auch möglich, am Fahrwerkrahmen **22** einen Drehwinkelsensor **17** anzuordnen, der die Drehwinkeländerung des Fahrwerkrahmens **22** zum Rahmen **24** ermittelt, wie in **Fig. 6** dargestellt. Alternativ ist auch ein Hubwegsensor **18** im oder am Fahrwerk-Hubzylinder **32** denkbar.

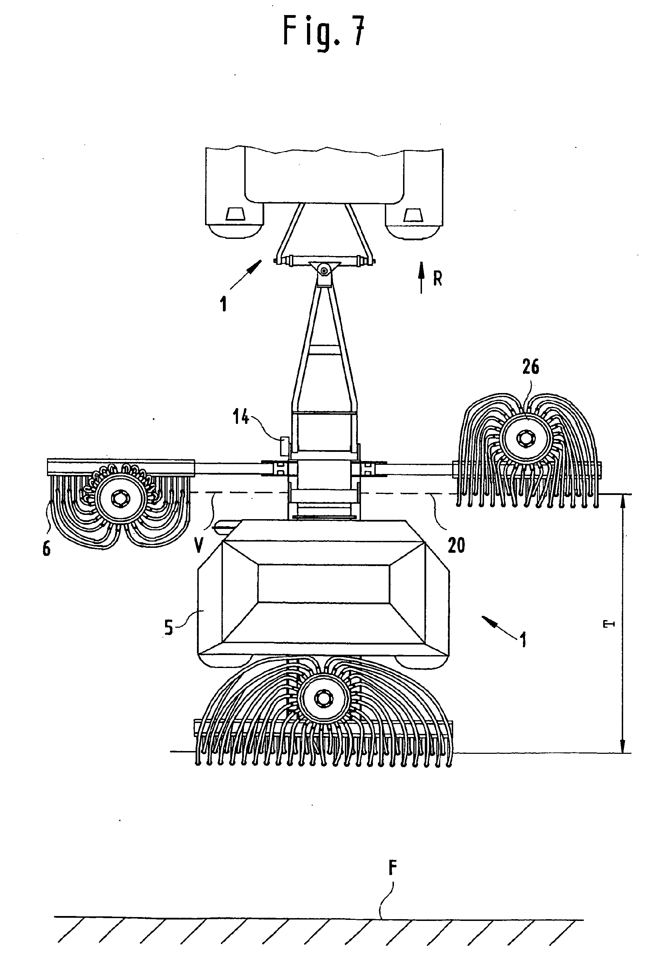

Bei hintereinander versetzt angeordneten Verteilern **6**, wie **Fig. 7** zeigt, befinden sich die rechten und linken Verteiler **6** an der Verteilgrenzlinie **20.** Die hinteren Verteiler **6** beginnen erst mit dem Verteilen, wenn die Totstrecke **T** zurückgelegt ist. Am Feldende schalten die vorderen Verteiler **6** an der Verteilgrenzlinie **20** ab, während die hinteren Verteiler **6** bis zur Verteilgrenzlinie **20** weitersäen. Der Abstand der Verteilgrenzlinie **20** zum Feldrand **F** beträgt in der Regel ein vielfaches der Arbeitsbreite **B** der Verteilmaschine **1**.

## Patentansprüche

1. Verteilmaschine **(1)** zum Ausbringen von körnigen Verteilgütern wie Saatgut, Dünger oder dergleichen auf eine land- oder forstwirtschaftlich genutzte Ackerfläche, die an einem oder auf einem Schlepper **(2)** und/oder einem schlepperbetriebenen Bodenbearbeitungsgerät **(3)** oder auf einem Trägerfahrzeug **(4)** angeordnet ist, wobei die Verteilmaschine **(1)** einen oder mehrere Verteilgutbehälter **(5)** für das Verteilgut und aus ihrer Arbeitsstellung **(A)** aushebbare Verteiler **(6)** für das Verteilgut, insbesondere Säschare **(7),** Düngerverteiler **(8)** oder Flüssigkeitsverteiler **(9)** aufweist, sowie eine oder mehrere von einem oder mehreren regelbaren elektrischen Antrieb/en angetriebene Dosiervorrichtung/en **(10,11)** für die dosierte Förderung des Verteilgutes aus einem oder mehreren Verteilgutbehälter/n **(5)** über Zuleitungen **(12,13)** zu den zugehörigen Verteilern **(6)** umfaßt, wobei die Arbeitsgeschwindigkeit und/oder der zurückgelegte Weg der Verteiler **(6,9)** von einem Meßfühler **(14)** sensorisch gemessen wird und die so ermittelten Meßsignale zur Steuerung des Antriebes für die Dosiervorrichtung/en **(10,11)** in der Weise verwendet werden, dass eine gleichmäßige Verteilung der gewünschten Menge des jeweiligen Verteilgutes auf der Ackerfläche gewährleistet ist, **dadurch gekennzeichnet, dass** die Dosiervorrichtung/en **(10,11)** während der Vorwärtsfahrt der Verteilmaschine **(1)** und während der Bewegung der Verteiler **(6)** aus der Nichtarbeitsstellung **(N)** in die Arbeitsstellung **(A)** selbsttätig über mindestens einen Sensor **(15)** eingeschaltet wird, und dass die Dosiervorrichtung/en **(10,11)** beim Verlassen der Verteiler **(6)** aus der Arbeitsstellung **(A)** abgeschaltet wird, wobei es möglich ist, die Dosiervorrichtung/en **(10,11)** unabhängig voneinander oder gemeinsam nach Wunsch zu schalten, sowohl manuell als auch über Messfühler **(14).**

2. Verteilmaschine **(1)** nach Anspruch 1, **dadurch gekennzeichnet, dass** die Dosierungsvorrichtung **(10,11)** vorzugsweise mit der gleichen Dosiergeschwindigkeit vor dem Erreichen der Arbeitsstellung **(A)** startet, wie sie vor dem Verlassen der Arbeitsstellung **(A)** hatte.

3. Verteilmaschine **(1)** nach Anspruch 1, **dadurch gekennzeichnet, dass** der Sensor **(15)** zum Aktivieren und Deaktivieren der Dosiervorrichtung **(10,11)** ein Drehwinkelsensor **(17)** ist.

4. Verteilmaschine **(1)** nach Anspruch 1, **dadurch gekennzeichnet, dass** der Sensor **(15)** als Hubwegsensor **(18)** ausgebildet ist.

5. Verteilmaschine **(1)** nach Anspruch 1, **dadurch gekennzeichnet, dass** zwei oder mehrere Sensoren **(15),** vorzugsweise Näherungsschalter **(19)** in einer Folgeschaltung die Dosierungsvorrichtung **(10,11)** ein- und ausschalten.

6. Verteilmaschine **(1)** nach einem oder mehreren der vorgenannten Ansprüche, **dadurch gekennzeichnet, dass** die Schaltpunkte der Sensoren **(15)** individuell einstellbar sind.

7. Verteilmaschine **(1)** nach einem oder mehreren der vorgenannten Ansprüche, **dadurch gekennzeichnet, dass** die Verteilmaschine **(1)** mehrere Dosiervorrichtungen **(10,11)** aufweist, die in einer Folgeschaltung nacheinander oder parallel ein- oder ausgeschaltet werden.

8. Verteilmaschine **(1)** nach einem oder mehreren der vorgenannten Ansprüche, **dadurch gekennzeichnet, dass** eine nachfolgende Dosiervorrichtung **(10,11)** zu einer vorrangigen Dosiervorrichtung zeit- oder wegversetzt eingeschaltet und beim Ausschalten zuerst die vorrangige Dosiervorrichtung **(10,11)** deaktiviert wird.

9. Verteilmaschine **(1)** nach einem oder mehreren der vorgenannten Ansprüche, **dadurch gekennzeichnet, dass** der Verteilbeginn **(V)** und das Verteilende der Verteiler **(6)** der einzelnen Dosiervorrichtungen **(10,11)** eine Verteilgrenzlinie **(20)** bilden.

## Claims

1. Distributing machine (1) for the spreading of granular material for distribution such as seed, fertilizer or suchlike onto an area of arable land used for agriculture or forestry, which is arranged against or on a tractor (2) and/or a tractor-driven tilling apparatus (3) or on a carrier vehicle (4), wherein the distributing machine (1) has one or more distribution material containers (5) for the material which is for distribution, and distributors (6) for the material which is for distribution, which are able to be raised from their working position (A), in particular seed drill coulters (7), fertilizer distributors (8) or liquid distributors (9), and comprises one or more dosing device(s) (10, 11), driven by one or more controllable electric drive(s), for the dosed conveying of the material which is for distribution out of one or more containers (5) for material which is for distribution via feed lines (12, 13) to the associated distributors (6), wherein the working speed and/or the path covered by the distributors (6, 9) is measured sensorically by a measuring sensor (14) and the measurement signals which are thus identified are used to control the drive for the dosing device(s) (10, 11) such that a uniform distribution of the desired quantity of the respective material for distribution on the area of arable land is guaranteed, **characterized in that** the dosing device(s) (10, 11) is automatically switched on via at least one sensor (15) during the forward travel of the distributing machine (1) and during the movement of the distributors (6) from the non-working position (N) into the working position (A), and that the dosing device(s) (10, 11) is switched off when the distributors (6) leave from the working position (A), wherein it is possible to switch the dosing device(s) (10, 11) independently of each other or jointly, as desired, both manually and also via measuring sensor (14).

2. Distributing machine (1) according to Claim 1, **characterized in that** the dosing device (10, 11) preferably starts with the same dosing speed before reaching the working position (A) as it had before leaving the working position (A).

3. Distributing machine (1) according to Claim 1, **characterized in that** the sensor (15) for activating and deactivating the dosing device (10, 11) is an angle of rotation sensor (17).

4. Distributing machine (1) according to Claim 1, **characterized in that** the sensor (15) is constructed as a stroke length sensor (18).

5. Distributing machine (1) according to Claim 1, **characterized in that** two or more sensors (15), preferably proximity switches (19) in a sequential circuit switch the dosing device (10, 11) on and off.

6. Distributing machine (1) according to one or more of the preceding claims, **characterized in that** the switching points of the sensors (15) are able to be set individually.

7. Distributing machine (1) according to one or more of the preceding claims, **characterized in that** the distributing machine (1) has several dosing devices (10, 11) which in a sequential circuit are switched on or off in succession, or in parallel.

8. Distributing machine (1) according to one or more of the preceding claims, **characterized in that** a subsequent dosing device (10, 11) is switched on in a staggered manner with regard to time or path, with respect to a preceding dosing device, and on switching off, firstly the preceding dosing device (10, 11) is deactivated.

9. Distributing machine (1) according to one of more of the preceding claims, **characterized in that** the start of distribution (V) and the end of distribution of the distributors (6) of the individual dosing devices (10, 11) form a distribution boundary (20).

## Revendications

1. Machine de répartition (1) pour l'épandage de produits granuleux à répartir tels que semences, engrain ou similaires sur une surface cultivée utilisée au plan agricole ou sylvicole, qui est rattachée ou disposée respectivement à ou sur un tracteur (2) et/ou un outil pour le travail du sol (3) fonctionnant avec le tracteur ou sur un véhicule support (4), la machine de répartition (1) présentant un ou plusieurs récipients de produit à répartir (5) pour le produit à répartir et des répartiteurs (6) pouvant être soulevés à partir de leur position de travail (A) pour le produit à répartir, en particulier un soc de semis (7), de répartiteurs d'engrais (8) ou des répartiteurs de liquide (9), et comprenant un ou plusieurs dispositif(s) de dosage (10, 11) entraîné(s) par un ou plusieurs entraînement(s) électrique(s) réglable(s) pour le transport dosé du produit à répartir à partir d'un ou de plusieurs récipient(s) de produit à répartir (5) au moins d'arrivées (12, 13) aux répartiteurs (6) spécifiques, la vitesse de travail et/ou le chemin parcouru des répartiteurs (6, 9) étant mesurés par détection par un capteur de mesure (14) et les signaux de mesure ainsi déterminés étant utilisés pour la commande de l'entraînement pour le(les) dispositif(s) de dosage (10, 11) en ce sens qu'une répartition uniforme de la quantité souhaitée du produit à répartir respectif sur la surface cultivée est garantie, **caractérisée en ce que** le(les) dispositif(s) de dosage (10, 11) est(sont) mis en route automatiquement au moyen d'au moins un capteur (15) pendant la progression en avant de la machine de répartition (1) et pendant le déplacement des répartiteurs (6) à partir de la position de non-travail (N) dans la position de travail (A), et ce que le(les) dispositif(s) de dosage (10, 11) est(sont) déconnecté(s) lors de la sortie des répartiteurs (6) de la position de travail (A), sachant qu'il est possible de commuter le(les) dispositif(s) de dosage (10, 11) indépendamment les uns des autres ou conjointement à la demande, aussi bien manuellement que par capteur de mesure (14).

2. Machine de répartition (1) selon la revendication 1, **caractérisée en ce que** le dispositif de dosage (10, 11) démarre de préférence avec la même vitesse de dosage avant d'atteindre la position de travail (A) que la vitesse qu'il avait avant de quitter la position de travail (A).

3. Machine de répartition (1) selon la revendication 1, **caractérisée en ce que** le capteur (15) pour activer et désactiver le dispositif de dosage (10, 11) est un capteur d'angle de rotation (17).

4. Machine de répartition (1) selon la revendication 1, **caractérisée en ce que** le capteur (15) est conçu comme un capteur de course de levage (18).

5. Machine de répartition (1) selon la revendication 1, **caractérisée en ce que** en ce deux ou plusieurs capteurs (15), de préférence des détecteurs de proximité (19) connectent et déconnectent le dispositif de dosage (10, 11) dans une commutation séquentielle.

6. Machine de répartition (1) selon l'une quelconque ou plusieurs des revendications précédentes, **caractérisée en ce que** les points de commutation des capteurs (15) sont réglables individuellement.

7. Machine de répartition (1) selon l'une quelconque ou plusieurs des revendications précédentes, **caractérisée en ce que** la machine de répartition (1) présente plusieurs dispositifs de dosage (10, 11), qui sont connectés ou déconnectés dans une commutation séquentielle de façon successive ou parallèle.

8. Machine de répartition (1) selon l'une quelconque ou plusieurs des revendications précédentes, **caractérisée en ce qu'**un dispositif de dosage (10, 11) consécutif est connecté de façon décalée dans le temps ou dans la course par rapport à un dispositif de dosage prioritaire et le dispositif de dosage (10, 11) prioritaire est désactivé d'abord lors de la déconnexion.

9. Machine de répartition (1) selon l'une quelconque ou plusieurs des revendications précédentes, **caractérisée en ce que** le début de la répartition (V) et la fin de la répartition des répartiteurs (6) des dispositifs de dosage (10, 11) individuels forment une ligne limite de répartition (20).
